# EUROPEAN PATENT APPLICATION

(11) **EP 4 707 618 A1**
(43) Date of publication of application: **11.03.2026**
(21) Application number: 24855471.9
(22) Date of filing: 28.06.2024
(51) Int. Cl.: F04D 29/66, F04D 17/04, F24F 1/0025

(54) **IMPELLER, CROSS-FLOW FAN, AND AIR CONDITIONER**

(30) Priority: 18.08.2023 CN 202311052482
(71) Applicant: Gree Electric Appliances, Inc. of Zhuhai, Zhuhai, Guangdong 519031 (CN)
(72) Inventor: HUANG, Meiling, Zhuhai, Guangdong 519031 (CN); ZOU, Jianhuang, Zhuhai, Guangdong 519031 (CN); CAO, Feng, Zhuhai, Guangdong 519031 (CN)
(74) Representative: Reddie & Grose LLP
(86) International application number: PCT/CN2024/102388
(87) International publication number: WO 2025/039742

(57) **Abstract**

A fan impeller mid-segment, a cross-flow fan impeller and an air conditioner is provided, wherein the fan impeller mid-segment includes a disc (3) having a first side (31) and a second side (32) opposite to each other, wherein the first side (31) is provided with a blade (4), and the second side (32) is provided with a welding groove (2) configured to be welded with the blade (4) on another fan impeller mid-segment, and the number of the welding grooves (2) is two or more than two, and the welding grooves are sequentially arranged at intervals along a circumferential direction of the disc; the second side is also provided with a silencing groove (1) located between two adjacent welding grooves (2). The fan impeller mid-segment may change the frequency of collision between the airflow and the wall surface of the disc and form a silencing cavity structure to silence the airflow flowing therethrough, so as to further reduce the generation and propagation of noise.

## Description

The present disclosure is based upon and claims priority to Chinese Patent Application No. 202311052482.0, filed on August 18, 2023, and titled "fan impeller mid-segment, cross-flow fan impeller and air conditioner ", which is hereby incorporated by reference in its entirety.

### TECHNICAL FIELD

The present disclosure relates to the field of air conditioning technology, in particular to a fan impeller mid-segment, a cross-flow fan impeller and an air conditioner.

### BACKGROUND ART

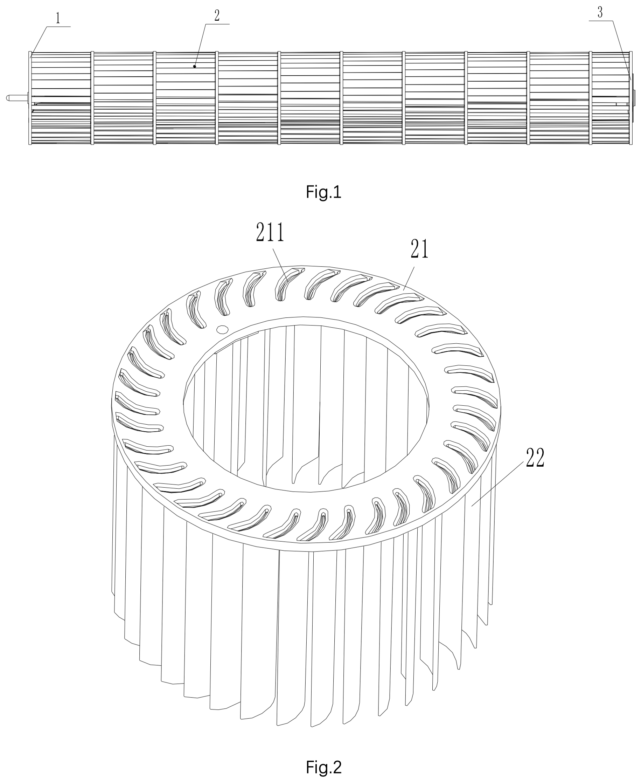

As shown in Fig. 1, the cross-flow fan impeller includes a shaft cover 1, an end cover 3 and a plurality of fan impeller mid-segments 2. As shown in Fig. 2, the fan impeller mid-segment 2 includes a disc 21 and a blade 22 arranged on one side of the disc 21. A welding groove 211 is provided on one side of the disc 21 remote from the blade 22, so that the disc 21 is welded with the blade 22 of another fan impeller mid-segment 2 through the welding groove 211. Wherein, when the fan blade 22 is welded, welding is performed after the welding groove 211 is found by manually rotating the fan impeller mid-segment 2.

During the rotation operation process of the above-described cross-flow fan impeller, periodical impact produced between the airflow and a surrounding solid wall surface leads to aerodynamic rotation noise produced by gas pressure pulsation, wherein the above-described solid wall surface includes a surface of the blade 22 and the disk 21 for fixing the blade 22. Effect of improving the aerodynamic noise of the existing cross-flow fan impeller is achieved by changing a structural design of the blade surface. In the case where the mold of the existing blade structure has been finalized, how to further improve the aerodynamic noise of the cross-flow fan impeller becomes an urgent problem to be solved in this field.

### CONTENT OF THE DISCLOSURE

In view of this, the present disclosure provides a fan impeller mid-segment, a cross-flow fan impeller and an air conditioner, and the main technical problem to be solved is: how to further reduce the aerodynamic noise when the cross-flow fan impeller rotates.

In order to achieve the above-described object, the present disclosure mainly provides the following technical solution:
In a first aspect, the embodiment of the present disclosure provides a fan impeller mid-segment, including a disc having a first side and a second side opposite to each other, wherein the first side is provided with a blade, and the second side is provided with a welding groove configured to be welded with the blade on another fan impeller mid-segment, and the number of the welding grooves is two or more than two, and the welding grooves are sequentially arranged at intervals along a circumferential direction of the disc;
wherein the second side is also provided with a silencing groove located between two adjacent welding grooves.

In some embodiments, the number of the silencing grooves is two or more than two, and the silencing grooves are sequentially arranged at intervals along the circumferential direction of the disc;
in the cross-section perpendicular to an axial direction of the fan impeller mid-segment, the areas of the cross-sectional profiles of respective silencing grooves are different.

In some embodiments, the included angle between the connecting lines of the respective centers of two adjacent welding grooves and the center of the fan impeller mid-segment is β, wherein the silencing groove is only provided between the two adjacent welding grooves when β≥9°;
or the silencing groove is provided between the respective two adjacent welding grooves.

In some embodiments, three welding grooves sequentially arranged along the circumferential direction of the disc are a first welding groove, a second welding groove and a third welding groove respectively;
the silencing grooves include a first silencing groove between the first welding groove and the second welding groove and a second silencing groove between the second welding groove and the third welding groove;
in the cross-section perpendicular to the axial direction of the fan impeller mid-segment, the included angle between the connecting lines of the respective centers of the first silencing groove and the second silencing groove and the center of the fan impeller mid-segment is θ, the included angle between the connecting lines of the respective centers of the first welding groove and the second welding groove and the center of the fan impeller mid-segment is β1, and the included angle between the connecting lines of the respective centers of the second welding groove and the third welding groove and the center of the fan impeller mid-segment is β2; wherein θ=(β1+β2)/2.

In some embodiments, the depth h of the silencing groove satisfies that: 0.5mm≤h≤2mm;
and/or the distance d between the silencing groove and the adjacent welding groove satisfies that: 1mm≤d≤ 1.2mm.

In some embodiments, in the cross-section perpendicular to the axial direction of the fan impeller mid-segment, the cross-sectional profile of the silencing groove has a first curve and a second curve opposite to each other, and the first curve and the second curve are in transition through a first arc on one side proximate to the center of the fan impeller mid-segment, and in transition through a second arc on one side remote from the center of the fan impeller mid-segment;
wherein the distance between the center of the first arc and the center of the fan impeller mid-segment is equal to the inside diameter D1 of the blade, the distance between the center of the second arc and the center of the fan impeller mid-segment is D2, and the outside diameter of the blade is D3, wherein D2≤0.95D3.

In some embodiments, the first curve is a convex curve, and a protruding direction of the convex curve is consistent with that of a convex surface of the blade;
and/or the second curve is a concave curve, and a recessing direction of the concave curve is consistent with that of a concave surface of the blade.

In some embodiments, along a direction proximate to the center of the fan impeller mid-segment, the distance L between the first curve and the second curve gradually increases, and the distance L between the first curve and the second curve satisfies that: 0.6mm≤L≤2.85mm.

In some embodiments, in the cross-section perpendicular to the axial direction of the fan impeller mid-segment, the midline of the cross-sectional profile of the blade includes two or more than two arcs sequentially connected, and the radii and central angles of respective arcs are different, wherein the center at a maximum thickness of the blade is located on the arc on one side of the midline remote from the center of the fan impeller mid-segment; and the thickness of the blade gradually increases to the maximum and then gradually decreases along the direction proximate to the center of the fan impeller mid-segment.

In a second aspect, the embodiment of the present disclosure provides a cross-flow fan impeller, which includes the fan impeller mid-segment according to any of the above-described embodiments.

In a third aspect, the embodiment of the present disclosure provides an air conditioner, which includes the cross-flow fan impeller according to any of the above-described embodiments.

By way of the above-described technical solution, the fan impeller mid-segment, the cross-flow fan impeller and the air conditioner have at least the following beneficial effects:
1. In the technical solution provided by the present disclosure, a silencing groove is provided between two adjacent welding grooves, so that when the cross-flow fan impeller rotates, the airflow may flow through the silencing groove which may change the frequency of collision between the airflow and a wall surface of the disc and reduce the aerodynamic noise when the cross-flow fan impeller rotates and improve the noise quality of the air conditioner when the cross-flow fan impeller is applied to the air conditioner. In addition, the center line of the silencing groove is parallel to the axis of the fan impeller mid-segment, and when the cross-flow fan impeller rotates, the airflow flows into the inside of the cross-flow fan impeller along a radial direction, and the center line of the silencing groove is perpendicular to the airflow direction, so that the silencing groove may form a silencing cavity structure to silence the airflow flowing therethrough, thereby further reducing the propagation of noise. In addition, a silencing groove is provided on the disc so that the weight of the disc is reduced, which may reduce the power consumption of the cross-flow fan impeller. When the cross-flow fan impeller is applied to the air conditioner, the power of the air conditioner may be reduced.
2. The shape of the blade is designed so that it is possible to change the incidence angle of the airflow and reduce the detached eddy on the blade surface, thereby lessening the power loss and increasing the air volume, and reducing the eddy noise on the blade surface, so as to further improve the noise effect.

The above description is only an overview of the technical solution of the present disclosure. In order to more clearly understand the technical means of the present disclosure and implement the same according to the content of the specification, the following is a detailed description of a preferred embodiment of the present disclosure in conjunction with the accompanying drawings.

### BRIEF DESCRIPTION OF THE DRAWINGS

In order to more explicitly explain the technical solutions in the embodiments of the present disclosure or the related art, the accompanying drawings required to be used in the description of the embodiments or the related art will be briefly introduced below. Obviously, the accompanying drawings described below are merely some of the embodiments of the present disclosure. For those of ordinary skill in the art, other accompanying drawings may also be obtained according to the structures shown in these accompanying drawings on the premise that no inventive effort is involved.
Fig. 1 is a schematic structural view of a cross-flow fan impeller in the related art;
Fig. 2 is a schematic structural view of a fan impeller mid-segment in the related art;
Fig. 3 is a schematic structural view of a fan impeller mid-segment provided by one embodiment of the present disclosure;
Fig. 4 is a top view of the fan impeller mid-segment;
Fig. 5 is an enlarged schematic view at A in Fig. 4;
Fig. 6 is a sectional view of C-C in Fig. 4;
Fig. 7 is an enlarged schematic view at B in Fig. 6;
Fig. 8 is a schematic structural view of the blade;
Fig. 9 shows a comparison chart of the noise effects of an existing cross-flow fan impeller and the cross-flow fan impeller of the present disclosure.

Reference numerals: 1. silencing groove; 2. welding groove; 3. disc; 4. blade; 11. first silencing groove; 12. second silencing groove; 21. first welding groove; 22. second welding groove; 23. third welding groove; 31. first side; 32. second side; 41. first a arc; 42. second a arc; 43. convex surface of blade; 44. concave surface of blade; 101. first curve; 102. second curve; 103. first arc; 104. second arc.

### EMBODIMENTS

The technical solution in the embodiments of the present disclosure will be explicitly and completely described below in conjunction with the accompanying drawings in the embodiments of the present disclosure. Apparently, the embodiments described are merely some of the embodiments of the present disclosure, rather than all the embodiments. On the basis of the embodiments of the present disclosure, all the other embodiments obtained by those skilled in the art shall fall into the protection scope of the present disclosure on the premise that no inventive effort is involved.

It is to be noted that, if the embodiments of the present disclosure contain directional indications (for example, up, down, left, right, front, rear...), the directional indications are only intended to explain the relative positional relationships, the movement conditions and the like between respective components in a specific attitude (as shown in the accompanying drawings). If the specific attitude changes, the directional indications will also change accordingly.

In addition, if the embodiment of the present disclosure contains descriptions related to "first" and "second", the descriptions of "first" and "second" which are only for descriptive purposes, cannot be understood to indicate or imply relative importance or implicitly specify the number of indicated technical features. Thus, the features defined as "first" and "second" may explicitly or implicitly include at least one of these features. In addition, the technical solutions of respective embodiments may be combined with each other, but have to be based on the implementation of those of ordinary skill in the art. When the combination of technical solutions is contradictory or impossible to be implemented, it should be considered that the combination of technical solutions neither exists nor falls within the scope for which protection is sought in the present disclosure.

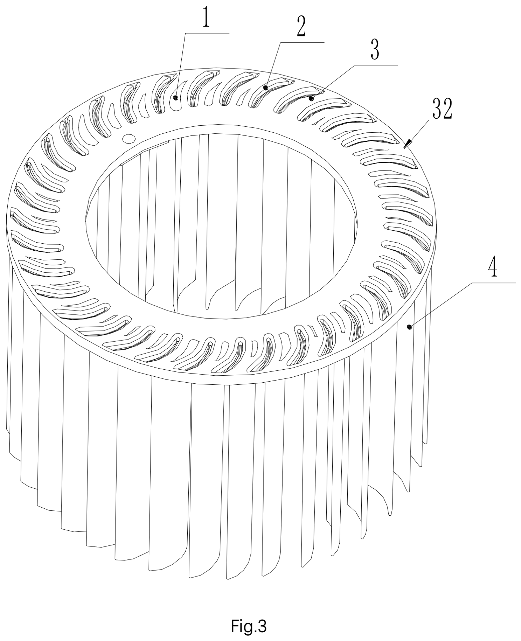

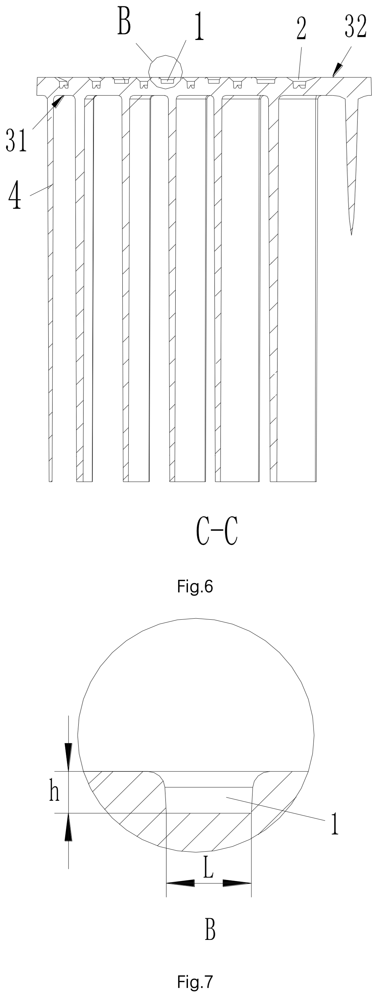

As shown in Figs. 3 and 6, the embodiment of the present disclosure provides a fan impeller mid-segment, including a disc 3 having a first side 31 and a second side 32 opposite to each other. The first side 31 is provided with a blade 4, which may be integrally molded on the disc 3. The second side 32 is provided with a welding groove 2 configured to be welded with the blade 4 on another fan impeller mid-segment. The number of the welding grooves 2 is two or more than two, and the welding grooves 2 are sequentially arranged at intervals along a circumferential direction of the disc 3. In some embodiments, the sizes of respective welding groove 2 are the same, and the number of the welding grooves 2 is the same as the number of the blades 4.

Wherein, the second side 32 is also provided with a silencing groove 1 located between two adjacent welding grooves 2.

In the above-described example, a silencing groove 1 is provided between two adjacent welding grooves 2, so that when the cross-flow fan impeller rotates, the airflow may flow through the silencing groove 1 which may change the frequency of collision between the airflow and a wall surface of the disc 3 and reduce the aerodynamic noise when the cross-flow fan impeller rotates and improve the noise quality of the air conditioner when the cross-flow fan impeller is applied to the air conditioner. In addition, the center line of the silencing groove 1 is parallel to the axis of the fan impeller mid-segment, and when the cross-flow fan impeller rotates, the airflow flows into the inside of the cross-flow fan impeller along a radial direction, and the center line of the silencing groove 1 is perpendicular to the airflow direction, so that the silencing groove 1 may form a silencing cavity structure to silence the airflow flowing therethrough, thereby further reducing the propagation of noise. In addition, a silencing groove 1 is provided on the disc 3 so that the weight of the disc 3 is reduced, which may reduce the power consumption of the cross-flow fan impeller. When the cross-flow fan impeller is applied to the air conditioner, the power of the air conditioner may be reduced.

It is to be noted here that: in the case where the mold of the existing blade structure has been finalized, in order to maintain the structure of the mold of the existing blade structure so as to reduce the alteration cost of the mold, the above-described silencing groove 1 is preferably a cutting groove provided on the disc 3. Specifically, the fan impeller mid-segment may be formed by integral injection molding using the mold of the existing blade structure, and then the fan impeller mid-segment after injection molding may be fed to a device such as a milling machine for cutting machining, so as to cut out the silencing groove 1 on the second side 32 of the disc 3. Therefore, the above-described silencing groove 1 may also sometimes be referred to as a silencing cutting groove or a cutting groove.

As shown in Fig. 3, the number of the silencing grooves 1 may be two or more than two, and the silencing grooves 1 are sequentially arranged at intervals along the circumferential direction of the disc 3. In the cross-section perpendicular to an axial direction of the fan impeller mid-segment, the areas of the cross-sectional profiles of respective silencing grooves 1 are different.

In the above-described example, more silencing grooves 1 are provided so that it is possible to further reduce the aerodynamic noise when the cross-flow fan impeller rotates. In addition, the areas of the cross-sectional profiles of respective silencing grooves 1 are different, so that it is possible to further change the frequency of collision between the airflow and the wall surface of the disk 3 when the cross-flow fan impeller rotates, so as to further reduce the aerodynamic noise when the cross-flow fan impeller rotates.

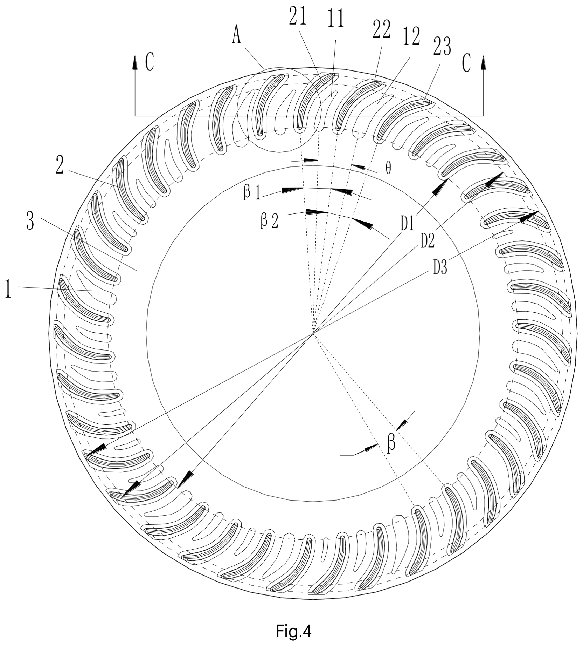

In one specific application example, as shown in Fig. 4, the centers of the two adjacent welding grooves 2 are connected with the center of the fan impeller mid-segment respectively, and the included angle between the two connecting lines is β. Wherein, the silencing groove 1 is only provided between the two adjacent welding grooves 2 when β≥9°. In other words, the silencing groove 1 is not provided between the two adjacent welding grooves 2 when β is less than 9°.

In the above-described example, when the included angle between the two adjacent welding grooves 2 satisfies that β≥9°, the area between the two adjacent welding grooves 2 is spacious so as to facilitate machining the silencing groove 1.

It is to be noted here that: the center of the above-described welding groove 2 may refer to the center of an arc on one side of the welding groove 2 proximate to the center of the fan impeller mid-segment.

In another example, in the case where the overall strength of the fan impeller mid-segment and the distance d between the silencing groove 1 and the welding groove 2 are ensured, the silencing grooves 1 may be provided between respective two adjacent welding grooves 2, so that more silencing grooves 1 may further reduce the aerodynamic noise when the cross-flow fan impeller rotates.

It is to be noted here that: in order to facilitate the machining, only one silencing groove 1 is provided between the two adjacent welding grooves 2.

In one specific application example, as shown in Fig. 4, the three welding grooves 2 sequentially arranged along the circumferential direction of the disc 3 are a first welding groove 21, a second welding groove 22 and a third welding groove 23. The silencing grooves 1 include a first silencing groove 11 between the first welding groove 2 and the second welding groove 2 and a second silencing groove 12 between the second welding groove 2 and the third welding groove 2.

In the cross-section perpendicular to the axial direction of the fan impeller mid-segment, the included angle between the two connecting lines formed between the centers of the first silencing groove 11 and the second silencing groove 12 with the center of the fan impeller mid-segment respectively is θ. The included angle between the two connecting lines formed between the centers of the first welding groove 21 and the second welding groove 22 with the center of the fan impeller mid-segment respectively is β1, and the included angle between the two connecting lines formed between the centers of the second welding groove 22 and the third welding groove 23 with the center of the fan impeller mid-segment respectively is β2. Wherein, θ=(β1+β2)/2.

In the above-described example, the above-described angle is set so that it is possible to allow that the silencing groove 1 is located at the center position between two adjacent welding grooves 2 and the distances between the silencing groove 1 and two adjacent welding grooves 2 are equal, which may improve the uniform mass distribution on the disc 3 and is beneficial to further reducing the aerodynamic noise when the cross-flow fan impeller rotates. Moreover, the silencing groove 1 is provided at the center position between two adjacent welding grooves 2, which also facilitates machining the silencing groove 1.

It is to be noted here that: the center of the above-described respective silencing grooves 1 may refer to the center of an arc on one side of the silencing groove 1 proximate to the center of the fan impeller mid-segment. The center of the above-described respective welding grooves 2 may refer to the center of an arc on one side of the welding groove 2 proximate to the center of the fan impeller mid-segment.

As shown in Figs. 6 and 7, in the cross-section parallel to the axial direction of the fan impeller mid-segment, the cross-sectional profile of the silencing groove 1 is U-shaped. In one specific application example, the depth h of the silencing groove 1 satisfies that: 0.5mm≤h≤2mm. With this design, the depth h of the silencing groove 1 is not too small to reduce the aerodynamic noise significantly, or is not so large as to affect the strength of the disc 3 and the fan impeller mid-segment.

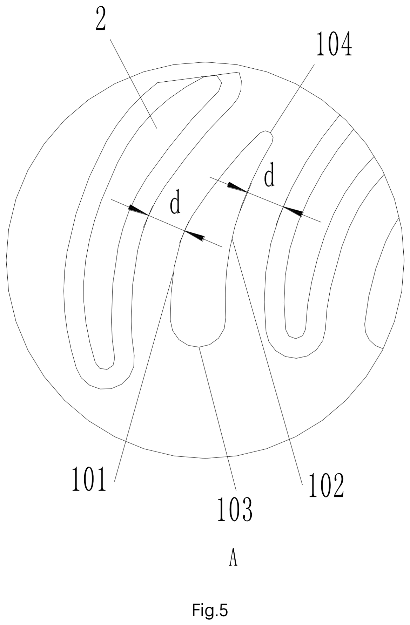

As shown in Fig. 5, the distance d between the silencing groove 1 and the adjacent welding groove 2 satisfies that: 1mm≤d≤ 1.2mm, so that the distance d between the silencing groove 1 and the adjacent welding groove 2 is not so small as to be easily deformed, and is not too large to reduce the aerodynamic noise by the silencing groove 1 significantly.

As shown in Fig. 5, in the cross-section perpendicular to the axial direction of the fan impeller mid-segment, the cross-sectional profile of the silencing groove 1 has a first curve 101 and a second curve 102 opposite to each other. The first curve 101 and the second curve 102 are in transition through the first arc 103 on one side proximate to the center of the fan impeller mid-segment. The first curve 101 and the second curve 102 are in transition through a second arc 104 on one side remote from the center of the fan impeller mid-segment. Wherein, as shown in Fig. 4, the distance between the center of the first arc 103 and the center of the fan impeller mid-segment is equal to the inside diameter D1 of the blade 4, that is, the centers of the first arcs 103 of the cross-sectional profiles of respective silencing grooves 1 are all located on the circle of the inside diameter D1 of the blade 4. The distance between the center of the second arc 104 and the center of the fan impeller mid-segment is D2, and the outside diameter of the blade 4 is D3, wherein D2≤0.95D3.

In the above-described example, when the number of the silencing grooves 1 is two or more than two, the centers of the first arcs 103 of the cross-sectional profiles of respective silencing grooves are all located on the circle of the inside diameter D1 of the blade 4. In this way, when respective silencing grooves 1 are machined, the machining may be all started from the circle of the inside diameter D1 of the blade 4, so that the starting points for machining respective silencing grooves 1 are consistent, which facilitates machining respective silencing grooves 1. In addition, by making D2 ≤ 0.95D3, the machining position of the second arc 104 may be controlled, so as to avoid the deformation of the second arc 104 due to excessive machining.

It is to be noted here is that: in the cross-section perpendicular to the axial direction of the fan impeller mid-segment, the distances D2 between the centers of the second arcs 104 of the cross-sectional profiles of the respective two silencing grooves 1 and the center of the fan impeller mid-segment are all not equal, so that the cross-sectional profile areas of respective silencing grooves 1 are different, so as to achieve the object of further changing the frequency of collision between the airflow and the wall surface of the disc 3 when the cross-flow fan impeller rotates and further reducing the aerodynamic noise when the cross-flow fan impeller rotates.

In one specific application example, as shown in Fig. 5, the first curve 101 is a convex curve, and a protruding direction of the convex curve is consistent with that of a convex surface 43 of the blade. The second curve 102 may be a concave curve, and a recessing direction of the concave curve is consistent with that of a concave surface 44 of the blade.

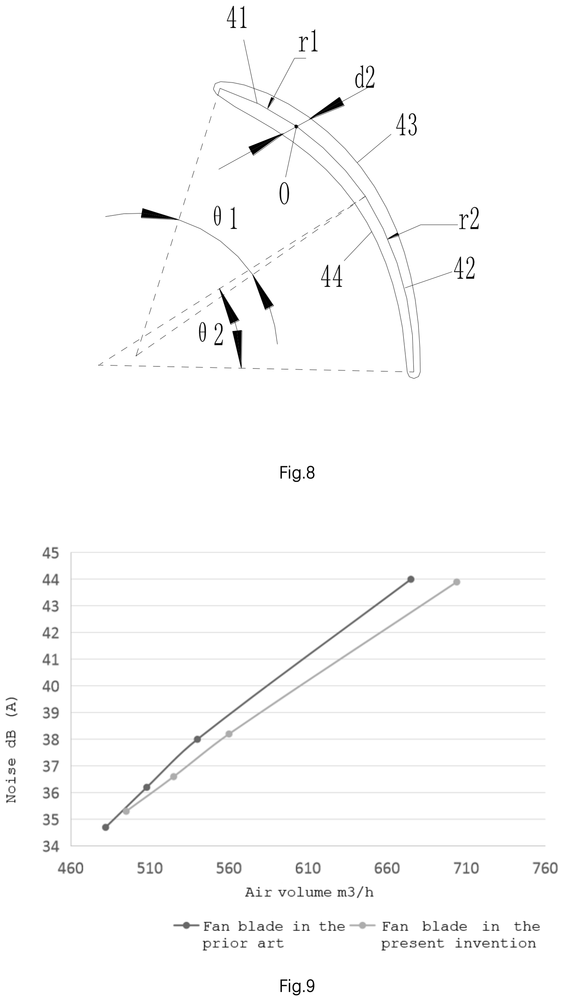

In the above-described example, with the above-described configuration, it is possible to allow that the silencing groove 1 has an overall shape similar to the blade 4. Since the overall shape of the blade 4 may silence and reduce the noise of the airflow flowing therethrough, the silencing groove 1 with a similar shape is form fit with the overall shape of the blade 4 so as to further silence and reduce the noise of the airflow flowing therethrough. Fig. 9 shows a comparison chart of the noise effects of an existing cross-flow fan impeller and the cross-flow fan impeller using a silencing groove with the above-described shape in the present disclosure. As may be seen from Fig. 9, under the same air volume, the noise of the cross-flow fan impeller using a silencing groove with the above-described shape in the present disclosure is lower, and the noise of the cross-flow fan impeller may be generally reduced by at least 1-1.5dBA.

As shown in Fig. 5, the distance L between the first curve 101 and the second curve 102 described above increases gradually along a direction proximate to the center of the fan impeller mid-segment, so that the volume of the silencing groove 1 increases gradually on the path of the airflow flowing through the silencing groove 1. In this way, it is possible to produce the effect of gradually expanding the airflow, so as to further silence and reduce the noise of the airflow flowing therethrough.

In one specific application example, the distance L between the first curve 101 and the second curve 102 described above satisfies that: 0.6mm ≤L≤2.85mm, so that the distance L between the first curve 101 and the second curve 102 is not so large as to affect the strength of the blade 4, and is not too small to reduce the aerodynamic noise by the silencing groove 1 significantly.

As shown in Fig. 8, in the cross-section perpendicular to the axial direction of the fan impeller mid-segment, the midline of the cross-sectional profile of the blade 4 includes two or more than two arcs sequentially connected, and the radii and central angles of respective arcs are different. Wherein, the center O at a maximum thickness of the blade 4 is located on the arc on one side of the midline remote from the center of the fan impeller mid-segment. Moreover, the thickness of the blade 4 gradually increases to the maximum and then gradually decreases along the direction proximate to the center of the fan impeller mid-segment.

In one specific application example, as shown in Fig. 8, in the cross-section perpendicular to the axial direction of the fan impeller mid-segment, the midline of the cross-sectional profile of the blade 4 consists of a first a arc 41 and a second a arc 42 sequentially connected. The central angle of the first a arc 41 is θ1, and the radius of the first a arc 41 is r1. The central angle of the second a arc 42 is θ2, and the radius of the first a arc 41 is r2. Wherein, the radii and central angles of the first a arc 41 and the second a arc 42 are different. That is, θ1 is not equal to θ2, and r1 is not equal to r2. The first a arc 41 is remote from the center of the fan impeller mid-segment relative to the second a arc 42, and the center at the maximum thickness of the blade 4 is located on the first a arc 41.

In the above-described example, the shape of the blade 4 is designed so that it is possible to change the incidence angle of the airflow and reduce the detached eddy on the surface of the blade 4, thereby lessening the power loss and increasing the air volume, and reducing the eddy noise on the surface of the blade 4, so as to further improve the noise reduction effect.

In one embodiment of the present disclosure, a cross-flow fan impeller is also provided, which may include the fan impeller mid-segment according to any of the above-described embodiments. Since the cross-flow fan impeller includes the above-described fan impeller mid-segment, the silencing groove 1 is provided between two adjacent welding grooves 2, so that when the cross-flow fan impeller rotates, the airflow may flow through the silencing groove 1 which may change the frequency of collision between the airflow and the wall surface of the disc 3 and reduce the aerodynamic noise when the cross-flow fan impeller rotates and improve the noise quality of the air conditioner when the cross-flow fan impeller is applied to the air conditioner. In addition, the center line of the silencing groove 1 is parallel to the axis of the fan impeller mid-segment, and when the cross-flow fan impeller rotates, the airflow flows into the inside of the cross-flow fan impeller along the radial direction, and the center line of the silencing groove 1 is perpendicular to the airflow direction, so that the silencing groove 1 may form a silencing cavity structure to silence the airflow flowing therethrough, thereby further reducing the propagation of noise. In addition, a silencing groove 1 is provided on the disc 3 so that the weight of the disc 3 is reduced, which may reduce the power consumption of the cross-flow fan impeller. When the cross-flow fan impeller is applied to the air conditioner, the power of the air conditioner may be reduced.

In one embodiment of the present disclosure, an air conditioner is also provided, which may include the cross-flow fan impeller according to any of the above-described embodiments. Since the air conditioner includes the above-described cross-flow fan impeller, it is possible to reduce the aerodynamic noise.

For the convenience of understanding, the overall structure of the present disclosure will be described below, and its operation principles will be elaborated.

The present disclosure aims to design a fan impeller mid-segment and a cross-flow fan impeller applying the fan impeller mid-segment, and the cross-flow fan impeller may be applied to an air conditioner. The fan impeller mid-segment of the present disclosure is provided with a plurality of silencing grooves 1 distributed at intervals on one side of the disc 3 remote from the blade 4, and the sizes of respective silencing grooves 1 are different. The silencing groove 1 may be a cutting groove structure formed by a cutting method, and the silencing groove 1 is a concave structure on the disc 3 other than the welding groove 2. The silencing groove 1 is arranged between two adjacent welding grooves 2. The included angle between the connecting lines between the respective centers of two adjacent welding grooves 2 and the center of the fan impeller mid-segment is β, wherein the silencing groove 1 is only provided between the two adjacent welding grooves 2 when β≥9°. The included angle between two silencing grooves 1 is designed in relation to the included angles between three adjacent welding grooves 2. The silencing groove 1 is stretched to one side of the disc 3 proximate to the blade 4 by a depth h along the axial direction of the cross-flow fan impeller. In the cross-section perpendicular to the axial direction of the fan impeller mid-segment, the cross-sectional profile of the silencing groove 1 has a first curve 101 and a second curve 102 opposite to each other, and the first curve 101 and the second curve 102 are in transition through a first arc 103 on one side proximate to the center of the fan impeller mid-segment, and in transition through a second arc 104 on one side remote from the center of the fan impeller mid-segment. Wherein, the first curve 101 is a convex curve, and the second curve 102 is a concave curve. The overall shapes of the first curve 101 and the second curve 102 are designed as irregular overall shape curves. The distance between the center of the second arc 104 and the center of the fan impeller mid-segment is smaller than the outside diameter of the outer circle of the welding groove 2.

The blade 4 is provided on one side of the disc 3 remote from the silencing groove 1. In the cross-section perpendicular to the axial direction of the fan impeller mid-segment, the midline of the cross-sectional profile of the blade 4 is a non-arc structure consisting of two or more than two arcs. The center at a maximum thickness of the blade 4 is located at a position proximate to the front end of the midline, and the front end of the midline refers to one end of the midline remote from the center of the fan impeller mid-segment. The shape of the welding groove 2 is designed to be structurally the same as that of the blade 4, and the silencing groove 1 and the welding groove 2 are arranged at intervals.

The above-described blade structure that is newly designed may improve the boundary layer and surface airflow separation of the blade surface, so as to lessen the power loss and increase the air volume, and reduce the eddy noise of the air conditioner.

With the cross-flow fan impeller designed by the present disclosure, the structure of the silencing groove 1 is designed so that it is possible to reduce the weight of the cross-flow fan impeller itself, so as to reduce the power of the air conditioner, and at the same time at least reduce the noise of the cross-flow fan impeller by 1-1.5dBA.

The above is only a preferred embodiment of the present disclosure, and thus does not limit the patent scope of the present disclosure. Any equivalent structural transformation made by using the content of the specification and the accompanying drawings of the present disclosure or direct/indirect application in other related technical fields under the disclosure concept of the present disclosure is included in the patent protection scope of the present disclosure.

## Claims

1. A fan impeller mid-segment, comprising a disc (3) having a first side (31) and a second side (32) opposite to each other, wherein the first side (31) is provided with a blade (4), and the second side (32) is provided with a welding groove (2) configured to be welded with the blade (4) on another fan impeller mid-segment, and the number of the welding grooves (2) is two or more than two, and the welding grooves (2) are sequentially arranged at intervals along a circumferential direction of the disc (3);
wherein the second side (32) is also provided with a silencing groove (1) located between two adjacent welding grooves (2).

2. The fan impeller mid-segment according to claim 1, wherein,
the number of the silencing grooves (1) is two or more than two, and the silencing grooves (1) are sequentially arranged at intervals along the circumferential direction of the disc (3);
in the cross-section perpendicular to an axial direction of the fan impeller mid-segment, the areas of the cross-sectional profiles of respective silencing grooves (1) are different.

3. The fan impeller mid-segment according to claim 2, wherein,
the included angle between the connecting lines of the respective centers of two adjacent welding grooves (2) and the center of the fan impeller mid-segment is β, wherein the silencing groove (1) is only provided between the two adjacent welding grooves (2) when β≥9°;
or the silencing groove (1) is provided between the respective two adjacent welding grooves (2).

4. The fan impeller mid-segment according to claim 1, wherein,
three welding grooves (2) sequentially arranged along the circumferential direction of the disc (3) are a first welding groove (21), a second welding groove (22) and a third welding groove (23) respectively;
the silencing grooves (1) comprise a first silencing groove (11) between the first welding groove (21) and the second welding groove (22) and a second silencing groove (12) between the second welding groove (22) and the third welding groove (23);
in the cross-section perpendicular to the axial direction of the fan impeller mid-segment, the included angle between the connecting lines of the respective centers of the first silencing groove (11) and the second silencing groove (12) and the center of the fan impeller mid-segment is θ, the included angle between the connecting lines of the respective centers of the first welding groove (21) and the second welding groove (22) and the center of the fan impeller mid-segment is β1, and the included angle between the connecting lines of the respective centers of the second welding groove (22) and the third welding groove (23) and the center of the fan impeller mid-segment is β2; wherein θ=(β1+β2)/2.

5. The fan impeller mid-segment according to claim 1, wherein, the depth h of the silencing groove (1) satisfies that: 0.5 mm≤h≤2 mm.

6. The fan impeller mid-segment according to claim 1, wherein, the distance d between the silencing groove (1) and the adjacent welding groove (2) satisfies that: 1 mm≤d ≤ 1.2 mm.

7. The fan impeller mid-segment according to claim 1, wherein, the depth h of the silencing groove (1) satisfies that: 0.5 mm≤h≤2 mm; and
the distance d between the silencing groove (1) and the adjacent welding groove (2) satisfies that: 1 mm≤d ≤1.2 mm.

8. The fan impeller mid-segment according to claim 1, wherein,
in the cross-section perpendicular to the axial direction of the fan impeller mid-segment, the cross-sectional profile of the silencing groove (1) has a first curve (101) and a second curve (102) opposite to each other, and the first curve (101) and the second curve (102) are in transition through a first arc (103) on one side proximate to the center of the fan impeller mid-segment, and in transition through a second arc (104) on one side remote from the center of the fan impeller mid-segment;
wherein the distance between the center of the first arc (103) and the center of the fan impeller mid-segment is equal to the inside diameter D1 of the blade (4), the distance between the center of the second arc (104) and the center of the fan impeller mid-segment is D2, and the outside diameter of the blade (4) is D3, wherein D2≤0.95D3.

9. The fan impeller mid-segment according to claim 8, wherein, the first curve (101) is a convex curve, and a protruding direction of the convex curve is consistent with that of a convex surface of the blade (4).

10. The fan impeller mid-segment according to claim 8, wherein, the second curve (102) is a concave curve, and a recessing direction of the concave curve is consistent with that of a concave surface of the blade (4).

11. The fan impeller mid-segment according to claim 8, wherein,
the first curve (101) is a convex curve, and a protruding direction of the convex curve is consistent with that of a convex surface of the blade (4); and
the second curve (102) is a concave curve, and a recessing direction of the concave curve is consistent with that of a concave surface of the blade (4).

12. The fan impeller mid-segment according to claim 8, wherein,
along a direction proximate to the center of the fan impeller mid-segment, the distance L between the first curve (101) and the second curve (102) gradually increases, and the distance L between the first curve (101) and the second curve (102) satisfies that: 0.6 mm≤L≤2.85 mm.

13. The fan impeller mid-segment according to any of claims 1 to 12, wherein,
in the cross-section perpendicular to the axial direction of the fan impeller mid-segment, the midline of the cross-sectional profile of the blade (4) comprises two or more than two arcs sequentially connected, and the radii and central angles of respective arcs are different, wherein the center at a maximum thickness of the blade (4) is located on the arc on one side of the midline remote from the center of the fan impeller mid-segment; and the thickness of the blade (4) gradually increases to the maximum and then gradually decreases along the direction proximate to the center of the fan impeller mid-segment.

14. A cross-flow fan impeller, comprising the fan impeller mid-segment according to any of claims 1 to 13.

15. An air conditioner, comprising the cross-flow fan impeller of claim 14.
